# EUROPEAN PATENT APPLICATION

(11) **EP 2 042 691 A2**
(43) Date of publication of application: **01.04.2009**
(21) Application number: 08016420.5
(22) Date of filing: 18.09.2008
(51) Int. Cl.: F01D 25/18, F01D 9/06

(54) **Lubricant pipe assembly for a turbine**

(30) Priority: 26.09.2007 GB 0718892
(71) Applicant: Rolls-Royce plc, 65 Buckingham Gate London SW1E 6AT (GB)
(72) Inventor: Carbines-Evans, Alex James, Yeovil Somerset BA22 8PU (GB); Quartly, Philip Arthur, Westbury-on-Trym Bristol BS9 4AH (GB); Slack, Graham Andrew, Nailsea Bristol BS48 2LW (GB)
(74) Representative: Gunn, Michael Alan

(57) **Abstract**

A pipe assembly including secondary leak containment and leak indication is described with particular reference to a lubricant-carrying pipe for supplying oil to an internal bearing chamber in a gas turbine engine. The oil pipe crosses a hot gas zone to a manifold on the engine inner casing so that an oil leak is a potential fire hazard. The connection into the bearing chamber manifold includes a secondary containment system that ensures that any leakage from the oil pipe seal is contained within an interstitial space between the pipe and a co-axial, secondary containment member. The interstitial space opens into a relatively safe zone outside the outer engine casing where the fire or safety hazard is eliminated or does not exist.

## Description

The invention concerns a pipe assembly.

In particular the invention relates to a pipe assembly including secondary leak containment and leak indication. The invention will be found useful for connecting a pipe carrying potentially hazardous fluid under pressure to a pipe union or port in a hostile zone.

The invention may be used in any situation where an internal fire or contamination is a safety concern, and where external indication of an internal fluid leak is necessary or preferable. In the particular example to be described below the invention is adapted for use in a lubricant supply line to a bearing chamber in the interior of a gas turbine engine. In such a situation the lubricant supply line, probably conveying a high-pressure oil supply, has to cross the hot gas stream and any leak is a fire hazard. In general terms the oil represents a potentially hazardous fluid and the hot gas stream represents a hostile zone. In other examples the potentially hazardous fluid may be a fuel or coolant supply and the hostile zone may represent a potential ignition source. Alternatively, the invention may be utilised to avoid contamination of material, say foodstuffs, carried in the "hostile" zone, for example in a metering valve arrangement.

According to the present invention a pipe assembly comprises a fluid pipe which extends through an outer containment member, the outer containment member defining an interstitial space around the pipe characterised in that one end of the outer containment member is adapted to engage with a union member and urges that end of the pipe into sealing engagement with a seal surface in the union member, the containment member having at least one aperture adjacent to the seal surface in the union member, the aperture providing fluid communication between a region adjacent the seal surface in the union member and the interstitial space such that in the event of a fluid leak occurring at the seal surface the leaking fluid passes through the aperture into the interstitial space and is directed through the interstitial space away from the union member.

In the preferred embodiment of the present invention the outer containment member has a threaded region which engages with a threaded portion on the union member to urge one end of the pipe into sealing contact with the seal surface in the union member. The outer containment member may be a tube nut.

The seal surface in the union member is preferably conical and engages with a corresponding shaped surface at the end of the pipe. An enlarged region may be provided on the pipe with which the outer containment member engages to urge the end of the pipe into sealing engagement with the seal surface in the union member. The enlarged region is preferably an annular shoulder adjacent to the conical surface at the end of the pipe.

Preferably a ring seal is used to seal the pipe assembly to a structure, such as an engine casing, through which the pipe assembly passes.

The invention and how it may be carried into practice will now be described with reference to the particular example illustrated in the accompanying drawings in which;
Figure 1 shows a prior art arrangement of an oil supply to an internal bearing chamber of a gas turbine engine;
Figure 2 shows an oil supply arrangement in accordance with the present invention.

The particular example illustrated in the drawings is a known oil feed arrangement for the internal bearing chambers of a gas turbine engine. In a typical arrangement of this kind an oil pump (not shown) is located on the exterior of the engine. It follows therefore that an oil supply to bearings in the interior of the engine, for example the high pressure and low-pressure spool bearings, has to cross the main gas path. In hot sections of the engine this means that a potentially hazardous fluid (hot oil at high pressure) has to pass through a hostile zone (exhaust gas path).

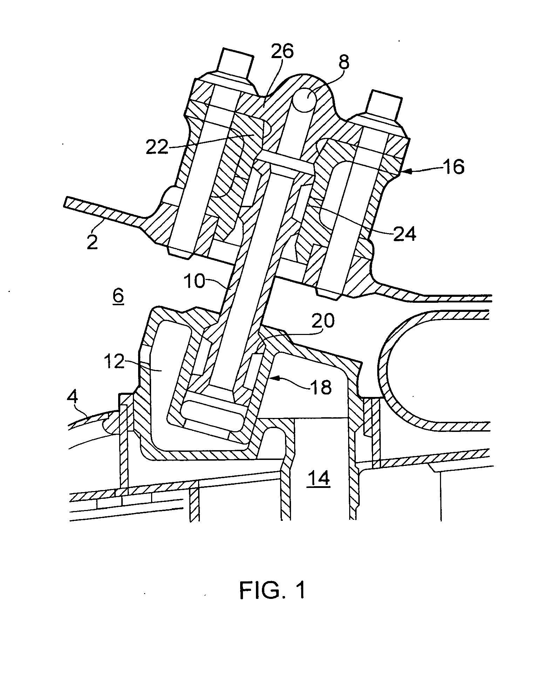

Referring now to Figure 1 there is shown a detail view of part of an oil supply to an internal bearing chamber (not shown) housing a rear bearing for a high-pressure spool in a gas turbine engine. An outer engine casing 2 is spaced from an inner engine casing 4 and between the two casings lays a hot gas zone 6 forming part of the hot gas path of the engine exhaust. Thus gas temperatures in the zone 6 are at exhaust gas temperatures in that part of the turbine, that is the gas temperature is sufficiently high to ignite oil and cause an oil fire.

The oil supply to the internal bearing chamber is carried by oil feed pipe 8 connected to an externally mounted oil supply manifold (not shown) receiving oil from an engine oil pump (not shown) positioned on the exterior of the engine. In order to provide a constant oil supply to the internal bearing chamber the oil supply must cross the hot gas zone 6. In the known arrangement illustrated here this is achieved by means of an oil transfer bobbin 10 spanning the hot gas zone 6. On the inner engine casing there is constructed a manifold, generally indicated at 12, from which an oil feed channel 14 leads into the bearing chamber. A second manifold 16 is constructed on the outer engine casing 2 opposite the inner manifold 14. The oil supply is transferred between the manifolds 12, 16 through oil transfer bobbin 10 which is sandwiched between the two manifold structures 12, 16.

The inner manifold structure 12 includes a receiving cylinder or socket 18 into which one end of bobbin 10 is fitted. The bottom of bobbin socket 18 is in open communication with the interior of the manifold 12. The bobbin 10 fits closely within the socket 18 and is sealed therein by an "O"-ring arrangement 20. The opposite end of bobbin 10 is located in the outer manifold 16 by a functionally equivalent arrangement. A manifold or spacer block 22 is mounted on the exterior of the casing 2 and is formed with a internal bore into which the outer end of bobbin 10 is received and sealed by a further arrangement of "O"-rings 24. Oil feed pipe 8 is attached to an end fitting 26 that is bolted onto the top of the manifold block 22, thus in normal operation oil passes freely from oil supply pipe 8 through bobbin 10 and into the bearing chamber feed passage 14.

In the illustrated prior art embodiment the "O"-rings are made of an elastomeric material, such as Neoprene ^{(Registered} Trade ^{Mark),} but the temperature of the environment can reach temperatures above the maximum operating temperature of the material causing the rings to thermally degrade and hence for the seals to lose sealing performance. Also the "O"-rings and bobbin can be difficult to assemble so that there is a possibility of the rings sustaining damage or even being cut. Therefore in this kind of arrangement difficulties arise with designs of this type resulting in a leak of oil into the hot gas zone. Failures of this kind lead to an undetectable oil leak with potential for an internal fire. In other embodiments and applications leaks may result in the release of a hazardous substance or a contaminant into an otherwise clean or pure medium.

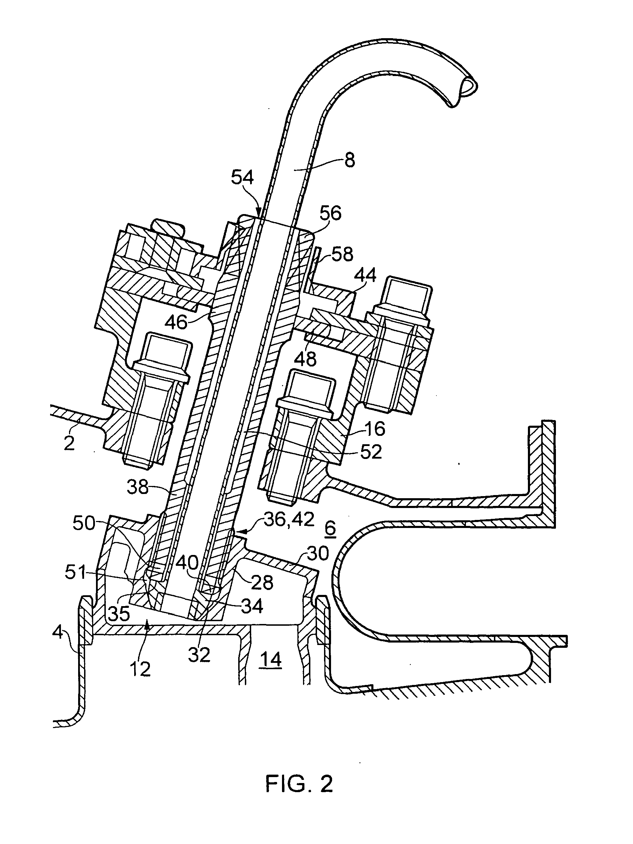

The present invention seeks to provide a solution to such problems. According to the present invention, in the illustrated example, the bobbin arrangement of figure 1 is replaced by the arrangement for spanning the hot gas zone shown in figure 2, where like parts carry like reference numerals.

Referring now to figure 2, as before a lubricant supplied by oil pipe 8 is to be carried across hot gas zone 6 to manifold 12 mounted on the inner engine casing 4, from where the lubricant is provided to a bearing chamber (not shown) through oil feed channel 14. In this new arrangement the oil transfer bobbin 10 and "O"-rings 20, 24 have been replaced by a double-walled arrangement in which the oil pipe is connected directly into the receiving manifold and is surrounded by a secondary containment member which is sealed at the inner, manifold end and is open at its other end in a relatively safe zone where leaked fluid will be observable.

At the oil pipe receiving location on the inner casing manifold 12 the oil pipe 8 extends across the zone 6 and is secured directly into a union member. The union member comprises a modified manifold socket 28 formed in manifold cap 30. The pipe 8 is secured by means of a "cone and olive" type seal. The socket 28 in manifold cap 30 has a generally cylindrical form with a seat 32 at its inner end in the form of an inverted cone (in the plane of the drawing). The end of pipe 8 is formed with a corresponding shaped "olive" termination 34 the dimensions of which are chosen to provide an annular seal seat with the cone 32 when the two are urged into engagement. The olive termination 34 is formed by upsetting the end of the pipe 8 in a curved shape revolved around the axis of the pipe 8, thus generating the "olive" shape. Behind the curved, upset end 34 the termination has an enlarged region in the form of an annular shoulder 35 in a plane generally at right angles to the pipe axis. The cone of seat 32 is formed as straight edge revolved around the axis of the cylindrical manifold socket 28. The dimensions of the interior of socket 28 and the exterior of pipe termination 34 are chosen to allow the socket 28 to receive the olive end 34 of pipe 8 up to the point it engages the cone seat 32. The interior of the socket 28 is threaded at 36 over a greater part of the length of the socket almost up to the base of the cone seat 32 to receive a nut 38 that is screwed into the socket to urge the pipe end 34 into engagement with the cone seat 32.

The nut 38 is adapted and arranged to constitute the secondary containment member provided by the invention. The nut 38 has the form of a tube nut disposed co-axially with the pipe 8. The length of the tube nut inner 38 is sufficiently long to span the width of the hot zone 6 between the first manifold 12 on the inner casing 4 and the exterior of the second manifold 16 on the outer casing 2 through which the pipe 8 passes. One end 40 of the tube nut 38 is shaped to generate a profile that engages the annular shoulder 35. Towards this end 40 the exterior surface of the nut is cut with a threaded portion 42 which can be engaged with the internal thread 36 of the socket 28. When tightened the nut 38 engages the pipe end 34 and urges it into sealing contact with the cone seat 32 in manifold cap 30.

At the opposite end of the elongated nut 38, the exterior of the nut is sealed to a cap 44 secured to the manifold 16 carried on the outer engine casing 2. The tube nut 38 is formed with an integral seal land 46 in the region that passes through the cap 44. Mounted in the cap is a ring seal 48 that is sprung radially inwards to bear against the seal land 46, provide a seal to prevent escape of hot gas from zone 6. The sliding ring type of seal allows for movement between the inner and outer casings 2, 4, due to differential thermal expansion, without releasing gas from zone 6. The exposed end 56 of the tube nut 38 is castellated, mainly for the purpose of receiving a torque-tightening tool. However, the cap 44 is provided with a plurality of upstanding, deformable tabs 58 or with a deformable ring as a method of securing the nut 38 against rotation. This anti-rotation feature is simply deformed to engage with the nut castellations after tightening.

The tube nut 38 is not a tight fit on the pipe 8. For most of its length the tube nut 38 has an internal bore diameter slightly greater than the external diameter of the pipe 8. Accurate co-axial location of the pipe 8 and nut 38 is essential only towards the nut to pipe end seal 34, 40 and pipe end to manifold cone seal 34, 32. In this region the bore of the nut more closely matches the pipe diameter so that as the threads 36, 42 are engaged the nut 38 may be turned without causing damage to the pipe 8. Thus, the interstitial space 52 between the internal bore of the tube nut 38 and the pipe 8 is openended at 54 in the region outside the outer engine casing 2.

The relative dimensions and different shapes of the widest part of the cone seat 32, the pipe end 34 and the nut end 40 create a small annular space 51 immediately behind the seal cone 32. The tube nut end 40 is provided with at least one, and preferably several small bleed holes 50 which, when the arrangement is assembled, provide communication between the annular space 51 and the interstitial space 52. Thus, in the event of a leak occurring at the junction of the pipe 8 with the manifold 12, that is at the seal seat 32,34, leaked fluid will accumulate in the space 51 and will find its way progressively into the interstitial space 52 appearing sooner or later at the open end 54. Any hot gas leakage through the tube nut to manifold threads 36, 42 will tend to pressurise the space 51 forcing leaked oil through the bleed holes 50 and into the interstitial space 52 to the open end 54.

In the example described above the region of a gas turbine engine external to the outer engine casing 2 is deemed a "safe" zone. Fluid conducted into this region is less likely to ignite due to the absence of ignition sources. To all practical intents and purposes and in this context the presence of leaked fluid at the open end of the tube nut should not represent an immediate hazard and should be observed during maintenance actions. Remedial action can then be taken.

As previously mentioned the invention may be found useful in other applications where it is wished to avoid a fluid leaked from a connection, joint, union or the like in an inaccessible position finding its way into a surrounding zone or region. Such a situation may be avoided by use of the secondary containment system according to the invention where in the first instance immediate contamination is averted and in the second instance an indication of the leak is provided by conducting leaked fluid to a more easily observed location.

## Claims

1. A pipe assembly comprising a fluid pipe (8) which extends through an outer containment member (38), the outer containment member (38) defining an interstitial space (52) around the pipe (8) **characterised in that** one end (42) of the containment member (38) is adapted to engage with a union member (28) and urges an end (34) of the pipe (8) into sealing engagement with a seal surface (32) in the union member (28), the containment member (38) having at least one aperture (50) to provide fluid communication between a region (51) adjacent the seal surface (32) in the union member (28) and the interstitial space (52) between the pipe (8) and the containment member (38), so that in the event of a fluid leak occurring at the seal surface (32) the leaking fluid passes through the aperture (50) into the interstitial space (52) and is directed through the interstitial space (52) away from the union member (28).

2. A pipe assembly as claimed in claim 1 **characterised in that** the outer containment member (38) has a threaded region (42) which engages with a threaded portion (36) on the union member (28) to urge the end (34) of the pipe (8) into sealing contact with the seal surface (32) in the union member (28).

3. A pipe assembly as claimed in claim 2 **characterised in that** the outer containment member (38) is a tube nut.

4. A pipe assembly as claimed in any of claims 1-3 **characterised in that** the seal surface (32) is generally conical and engages with a corresponding shaped surface (34) at the end of the pipe (8).

5. A pipe assembly as claimed in any preceding claim **characterised in that** the end of the pipe (8) adjacent to seal surface (32) has an enlarged region (36) with which the outer containment member (38) engages to urge the end of the pipe (8) into sealing engagement with the seal surface (32) in the union member (28).

6. A pipe assembly as claimed in claim 5 **characterised in that** the enlarged region is an annular shoulder (36) adjacent to the conical surface at the end of the pipe (8).

7. A pipe assembly as claimed in any preceding claim **characterised in that** a ring seal (48) is provided to seal the pipe assembly to a structure (2) which in operation the pipe assembly passes through.
